# EUROPEAN PATENT APPLICATION

(11) **EP 1 783 167 A1**
(43) Date of publication of application: **09.05.2007**
(21) Application number: 05767294.1
(22) Date of filing: 27.07.2005
(51) Int. Cl.: C08L 27/12, C08K 5/095

(54) **FLUORINE-CONTAINING POLYMER LATEX, METHOD FOR PRODUCING SAME AND FLUORINE-CONTAINING POLYMER**

(30) Priority: 28.07.2004 JP 2004220860
(71) Applicant: Asahi Glass Company, Limited, Chiyoda-ku, Tokyo 100-8405 (JP)
(72) Inventor: FUNAKI, Hiroshi, Asahi Glass Company, Limited, Ichihara-shi Chiba 290-8566 (JP); SEKI, Ryuji, Asahi Glass Company, Limited, Yokohama-shi, Kanagawa 221-8755 (JP); OHARU, Kazuya, Asahi Glass Company, Limited, Yokohama-shi, Kanagawa 221-8755 (JP); KAMIYA, Hiroki, Asahi Glass Company, Limited, Ichihara-shi Chiba 290-8566 (JP)
(74) Representative: Müller-Boré & Partner Patentanwälte
(86) International application number: PCT/JP2005/013770
(87) International publication number: WO 2006/011533

(57) **Abstract**

To provide a process for producing a fluoropolymer latex, which is excellent in the productivity of the fluoropolymer latex, and which can produce a fluoropolymer latex excellent in the storage stability, and to provide such a fluoropolymer latex.

A process for producing a fluoropolymer latex, which comprises emulsion polymerizing a fluoromonomer in an aqueous medium containing from 0.001 to 10.0 mass% of a fluorine-containing emulsifier represented by the formula (1) : F(CF₂)ₙO(CF₂CF₂O)ₘCF₂COOA (wherein A is a hydrogen atom, an alkali metal or NH₄, n is an integer of from 3 to 10, and m is 0 or an integer of from 1 to 3) to obtain the fluoropolymer latex.

## Description

### TECHNICAL FIELD

The present invention relates to a fluoropolymer latex stabilized by a particular fluorine-containing emulsifier, and a process for its production.

### BACKGROUND ART

As disclosed in US 3,271,341 and JP-A-2002-317003, a method for copolymerizing a fluoromonomer alone or copolymerizing a fluoromonomer and another monomer in combination in an aqueous medium by using various emulsifiers has been widely employed heretofore, and various emulsifiers have also been proposed.

Depending on kinds of these emulsifiers, the polymerization rate of a fluoromonomer, the storage stability of a fluoropolymer latex, and the molecular weight and various physical properties of a fluoropolymer to be obtained are known to change. The polymerization rate of the fluoromonomer and the storage stability of the fluoropolymer latex are still insufficient, and therefore one having excellent properties has been desired.

### DISCLOSURE OF THE INVENTION

### OBJECTS TO BE ACCOMPLISHED BY THE INVENTION

The object of the present invention is to provide a process for producing a fluoropolymer latex by emulsion polymerization using a particular fluorine-containing emulsifier, which is excellent in the productivity of the fluoropolymer latex, and to provide such a fluoropolymer latex. Further, another object of the present invention is to provide a process for producing a fluoropolymer latex, wherein the fluoropolymer latex obtained is excellent in the storage stability, and to provide such a fluoropolymer latex.

Namely, the present invention provides a fluoropolymer latex characterized by comprising a fluoropolymer and a fluorine-containing emulsifier represented by the formula (1) : F(CF₂)ₙO(CF₂CF₂O)ₘCF₂COOA (wherein A is a hydrogen atom, an alkali metal or NH₄, n is an integer of from 3 to 10, and m is 0 or an integer of from 1 to 3).

Further, the present invention provides such a fluoropolymer latex, wherein the fluoropolymer is a copolymer of at least one fluoromonomer selected from the group consisting of tetrafluoroethylene (hereinafter referred to as TFE), vinylidene fluoride (hereinafter referred to as VdF), hexafluoropropylene (hereinafter referred to as HFP), CF₂=C(OR_{f})ₙF₂₋ₙ (wherein R_{f} is a C₁₋₈ perfluoroalkyl group or a perfluorooxyalkylene group containing at least one ether bond per molecule, n is 1 or 2, and any of carbon chains may be a straight chain, may contain a branched chain or may have a cyclic structure) and chlorotrifluoroethylene (hereinafter referred to as CTFE), if necessary with at least one monomer selected from the group consisting of CH₂=CHOR (wherein R is a C₁₋₈ alkyl group or an oxyalkylene group containing at least one ether bond, and any of carbon chains may be a straight chain, may contain a branched chain or may have a cyclic structure), propylene (hereinafter referred to as P) and ethylene (hereinafter referred to as E), and if necessary with at most 10 mol% of crosslinking group-containing monomer.

Further, the present invention provides such a fluoropolymer latex, wherein the fluoropolymer is at least one member selected from the group consisting of a TFE polymer, a TFE/CTFE copolymer, a TFE/P copolymer, a TFE/HFP copolymer, a VdF/HFP copolymer, a TFE/VdF/HFP copolymer, a TFE/CF₂=CFOCF₃ copolymer, a TFE/CF₂=CFOC₃F₇ copolymer, a TFE/CF₂=CFOCF₃/CF₂=CFOC₃F₇ copolymer, a TFE/CF₂=C(OC₂F₅)₂ copolymer, a TFE/methyl vinyl ether (hereinafter referred to as MVE) copolymer, a TFE/ethyl vinyl ether (hereinafter referred to as EVE) copolymer, a TFE/n-butyl vinyl ether (hereinafter referred to as BVE) copolymer, a TFE/EVE/BVE copolymer, a VdF/CF₂=CFOC₃F₇ copolymer, an E/HFP copolymer and a TFE/P/VdF copolymer.

Further, the present invention provides such a fluoropolymer latex, wherein the fluoropolymer is at least one member selected from the group consisting of a TFE polymer, a TFE (from 40 to 60 mol%)/P (from 60 to 40 mol%) copolymer, a TFE (from 40 to 70 mol%)/CF₂=CFOCF₃ (from 60 to 30 mol%) copolymer, a TFE (from 40 to 70 mol%)/CF₂=CFOC₃F₇ (from 60 to 30 mol%) copolymer, a TFE (from 40 to 70 mol%)/CF₂=C(OC₂F₅)₂ (from 60 to 30 mol%) copolymer, a TFE (from 70 to 30 mol%)/MVE (from 30 to 70 mol%) copolymer, a TFE (from 70 to 30 mol%)/EVE (from 30 to 70 mol%) copolymer, a TFE (from 70 to 30 mol%)/BVE (from 30 to 70 mol%) copolymer, a TFE (from 60 to 30 mol%)/EVE (from 1 to 69 mol%)/BVE (from 1 to 69 mol%) copolymer, a VdF (from 40 to 70 mol%)/CF₂=CFOC₃F₇ (from 60 to 30 mol%) copolymer, an E (from 40 to 60 mol%)/HFP (from 60 to 40 mol%) copolymer and a TFE (from 30 to 60 mol%)/P (from 20 to 50 mol%)/VdF (from 1 to 40 mol%) copolymer.

Further, the present invention provides such a fluoropolymer latex, wherein the fluorine-containing emulsifier is F(CF₂)ₙOCF₂CF₂OCF₂COOA (wherein A is a hydrogen atom, an alkali metal or NH₄, and n is 3 or 4).

Further, the present invention provides a process for producing a fluoropolymer latex, which comprises emulsion polymerizing a fluoromonomer in an aqueous medium containing 0.001 to 10.0 mass% of a fluorine-containing emulsifier represented by the formula (1): F(CF₂)ₙO(CF₂CF₂O)ₘCF₂COOA (wherein A is a hydrogen atom, an alkali metal or NH₄, n is an integer of from 3 to 10, and m is 0 or an integer of from 1 to 3) to obtain the fluoropolymer latex.

Further, the present invention provides such a process for producing a fluoropolymer latex, wherein the fluoropolymer is at least one fluoromonomer selected from the group consisting of TFE, VdF, HFP, CF₂=C(OR_{f})ₙF₂₋ₙ (wherein R_{f} is a C₁₋₈ perfluoroalkyl group or a perfluorooxyalkylene group containing at least one ether bond per molecule, n is 1 or 2, and any of carbon chains may be a straight chain, may contain a branched chain or may have a cyclic structure) and CTFE, and if necessary at least one monomer selected from the group consisting of CH₂=CHOR (wherein R is a C₁₋₈ alkyl group or an oxyalkylene group containing at least one ether bond, and any of carbon chains may be a straight chain, may contain a branched chain or may have a cyclic structure), propylene (hereinafter referred to as P) and ethylene (hereinafter referred to as E) is copolymerized, and if necessary at most 10 mol% of crosslinking group-containing monomer is copolymerized.

Further, the present invention provides such a process for producing a fluoropolymer latex, wherein the fluorine-containing emulsifier is F(CF₂)ₙOCF₂CF₂OCF₂COOA (wherein A is a hydrogen atom, an alkali metal or NH₄, and n is 3 or 4).

Further, the present invention provides a fluoropolymer latex obtained by concentrating a fluoropolymer latex obtained by the process for producing the fluoropolymer latex, to a fluoropolymer concentration of at least 30 mass%.

Further, the present invention provides a fluoropolymer obtained by coagulating a fluoropolymer latex obtained by the process for producing the fluoropolymer latex.

### EFFECTS OF THE INVENTION

According to the process for producing a fluoropolymer latex of the present invention, the polymerization rate of a fluoromonomer is fast and the productivity of the fluoropolymer latex is excellent. Further, the obtained fluoropolymer latex is excellent in the storage stability.

### BEST MODE FOR CARRYING OUT THE INVENTION

In the process for producing a fluoropolymer latex of the present invention, a fluoromonomer is subjected to emulsion polymerization in an aqueous medium containing the fluorine-containing emulsifier represented by the formula (1) .

As the fluoromonomer to be subjected to emulsion polymerization, at least one fluoromonomer selected from the group consisting of TFE, VdF, HFP, a perfluoro(alkyl or alkylene vinyl ether) represented by CF₂=C(OR_{f})ₙF₂₋ₙ (wherein R_{f} is a C₁₋₈ perfluoroalkyl group or a perfluorooxyalkylene group containing at least one ether bond per molecule, n is 1 or 2, and any of carbon chains may be a straight chain, may contain a branched chain or may have a cyclic structure) and CTFE, may be mentioned. Such fluoromonomers may be used alone or in combination of two or more of them.

Further, other than the above fluoromonomer, one or more copolymerizable monomers such as CH₂=CHOR (wherein R is a C₁₋₈ alkyl group or an oxyalkylene group containing at least one ether bond, and any of carbon chains may be a straight chain, may contain a branched chain or may have a cyclic structure), P and E, may be copolymerized.

Further, the polymerizable monomer to be subjected to emulsion polymerization may contain, in addition to the above monomers, at most 10 mol% of a crosslinking group-containing monomer. As such a crosslinking group-containing monomer, 1-bromo-1,1,2,2-tetrafluoroethyltrifluorovinyl ether (hereinafter referred to as BrVE), maleic anhydride, itaconic anhydride, maleic acid or itaconic acid may, for example, be exemplified. The polymerization ratio of the crosslinking group-containing monomer is preferably from 0.001 to 5 mol%, particularly preferably from 0.01 to 3 mol%.

The present invention is characterized by containing one or more fluorine-containing emulsifiers represented by the formula (1): F(CF₂)ₙO(CF₂CF₂O)ₘCF₂COOA (wherein A is a hydrogen atom, an alkali metal or NH₄, n is an integer of from 3 to 10, and m is 0 or an integer of from 1 to 3).

As the alkali metal for A, lithium, sodium or potassium may, for example, be exemplified. A is particularly preferably NH₄ or sodium, and most preferably NH₄.

The following may be exemplified as particularly preferred fluorine-containing emulsifiers, but preferred emulsifiers are not limited thereto.

As a specific example when A is a hydrogen atom, C₃F₇ OCF₂CF₂OCF₂COOH, C₄F₉OCF₂CF₂OCF₂COOH, C₅F₁₁OCF₂CF₂OCF₂COOH, C₆F₁₃ OCF₂CF₂OCF₂COOH, C₃F₇O(CF₂CF₂O)₂CF₂COOH, C₄F₉O(CF₂CF₂O)₂CF₂COOH, C₅F₁₁O(CF₂CF₂O)₂CF₂COOH, C₆F₁₃O(CF₂CF₂O)₂CF₂COOH, C₃F₇O(CF₂CF₂O)₃CF₂ COOH, C₄F₉O(CF₂CF₂O)₃CF₂COOH, C₅F₁₁O(CF₂CF₂O)₃CF₂COOH, or C₆F₁₃O (CF₂CF₂O)₃CF₂COOH may be mentioned.

As a specific example when A is lithium, C₃F₇OCF₂CF₂OC F₂COOLi, C₄F₉OCF₂CF₂OCF₂COOLi, C₅F₁₁OCF₂CF₂OCF₂COOLi, C₆F₁₃OCF₂CF₂O CF₂COOLi, C₃F₇O(CF₂CF₂O)₂CF₂COOLi, C₄F₉O(CF₂CF₂O)₂CF₂COOLi, C₅F₁₁O(C F₂CF₂O)₂CF₂COOLi, C₆F₁₃O(CF₂CF₂O)₂CF₂COOLi, C₃F₇O(CF₂CF₂O)₃CF₂COOLi, C₄F₉O(CF₂CF₂O)₃CF₂COOLi, C₅F₁₁O(CF₂CF₂O)₃CF₂COOLi, or C₆F₁₃O(CF₂CF₂ O)₃CF₂COOLi may be mentioned.

As a specific example when A is sodium, C₃F₇OCF₂CF₂OCF₂ COONa, C₄F₉OCF₂CF₂OCF₂COONa, C₅F₁₁OCF₂CF₂OCF₂COONa, C₆F,₃OCF_{Z}CF_{z}O CF₂COONa, C₃F₇O(CF₂CF₂O)₂CF₂COONa, C₄F₉O(CF₂CF₂O)₂CF₂COONa, C₅F₁₁O (CF₂CF₂O)₂CF₂COONa, C₆F₁₃O(CF₂CF₂O)₂CF₂COONa, C₃F₇O(CF₂CF₂O)₃CF₂COO Na, C₄F₉O(CF₂CF₂O)₃CF₂COONa, C₅F₁₁O(CF₂CF₂O)₃CF₂COONa, or C₆F₁₃O(C F₂CF₂O)₃CF₂COONa may be mentioned.

As a specific example when A is potassium, C₃F₇OCF₂CF₂ OCF₂COOK, C₄F₉OCF₂CF₂OCF₂COOK, C₅F₁₁OCF₂CF₂OCF₂COOK, C₆F₁₃OCF₂CF₂O CF₂COOK, C₃F₇O(CF₂CF₂O)₂CF₂COOK, C₄F₉O(CF₂CF₂O)₂CF₂COOK, C₅F₁₁O(CF₂C F₂O)₂CF₂COOK, C₆F₁₃O(CF₂CF₂O)₂CF₂COOK, C₃F₇O(CF₂CF₂O)₃CF₂COOK, C₄F₉O (CF₂CF₂O)₃CF₂COOK, C₅F₁₁O(CF₂CF₂O)₃CF₂COOK, or C₆F₁₃O(CF₂CF₂O)₃CF₂CO OK may be mentioned.

As a specific example when A is NH₄, C₃F₇OCF₂CF₂OCF₂COO NH₄, C₄F₉OCF₂CF₂OCF₂COONH₄, C₅F₁₁OCF₂CF₂OCF₂COONH₄, C₆F₁₃OCF₂CF₂O CF₂COONH₄, C₃F₇O(CF₂CF₂O)₂CF₂COONH₄, C₄F₉O(CF₂CF₂O)₂CF₂COONH₄, C₅F ₁₁O(CF₂CF₂O)₂CF₂COONH₄, C₆F₁₃O(CF₂CF₂O)₂CF₂COONH₄, C₃F₇O(CF₂CF₂O)₃C F₂COONH₄, C₄F₉O(CF₂CF₂O)₃CF₂COONH₄, C₅F₁₁O(CF₂CF₂O)₃CF₂COONH₄, or C₆F₁₃O(CF₂CF₂O)₃CF₂COONH₄ may be mentioned.

As the fluorine-containing emulsifiers of the present invention, C₃F₇OCF₂CF₂OCF₂COONH₄, C₄F₉OCF₂CF₂OCF₂COON H₄, C₆F₁₃OCF₂CF₂OCF₂COONH₄, C₄F₉O(CF₂CF₂O)₂CF₂COONH₄, C₄F₉O(CF₂CF₂ O)₃CF₂COONH₄ are particularly preferred, and among them C₃F ₇OCF₂CF₂OCF₂COONH₄ and C₄F₉OCF₂CF₂OCF₂COONH₄ are especially preferred.

In the present invention, a fluoropolymer latex is obtained by subjecting the fluoromonomer to emulsion polymerization in an aqueous medium containing 0.001 to 10.0 mass% of the fluorine-containing emulsifier. The content of the fluorine-containing emulsifier in the aqueous medium is preferably from 0.001 to 5 mass%, particularly preferably from 0.01 to 3 mass%. The fluorine-containing emulsifier contained in the fluoropolymer latex thus obtained is preferably made to be from 0.03 to 10 mass%, particularly preferably from 0.05 to 5 mass%, based on the fluoropolymer, and it is further preferably made to be from 0.001 to 5 mass%, particularly preferably from 0.01 to 3 mass%, based on the aqueous medium.

When the fluorine-containing emulsifier of the present invention is compared with a conventional emulsifier having no ether oxygen such as an ammonium perfluorooctanoate or an emulsifier having a structure, in which a perfluoroalkyl group is branched, the dynamic surface tension of an aqueous solution having the same concentration becomes low. Accordingly, it provides characteristics such that the reactivity of a gaseous monomer at the time of polymerization is high, and the wettability and permeability of the obtained fluoropolymer latex are high.

Particularly, in the polymerization reaction of a TFE/P copolymer or a TFE/P/VdF copolymer, the solubility of a gaseous monomer in an aqueous medium is very high as compared with ammonium perfluorooctanoate, whereby the productivity can be improved.

As a polymerization initiator to be used in the emulsion polymerization, a usual radical polymerization initiator can be used, and an aqueous polymerization initiator is particularly preferred. As a specific example of such an aqueous polymerization initiator, a persulfate such as ammonium persulfate, hydrogen peroxide or a redox polymerization initiator comprising a combination of these compounds and a reducing agent such as sodium hydrogensulfite or sodium thiosulfate, an inorganic polymerizable initiator having a small amount of iron, ferrous salt, silver sulfate or the like incorporated in the redox polymerization initiator or an organic polymerization initiator such as disuccinic acid peroxide or azobisisobutylamidine dihydrochloride may be mentioned.

The polymerization initiator may be added from the start or in the middle of the emulsion polymerization. The amount of the polymerization initiator is preferably from 0.0001 to 3 mass%, particularly preferably from 0.001 to 1 mass%, based on the monomer to be used for the polymerization.

In the polymerization of the fluoromonomer, a chain transfer agent may be used for controlling the molecular weight.

As the chain transfer agent, an alcohol such as methanol or ethanol, a chlorofluorohydrocarbon such as 1,3-dichloro-1,1,2,2,3-pentafluoropropane or 1,1-dichloro-1-fluoroethane, a hydrocarbon such as pentane, hexane or cyclohexane, R^{f2}I₂ (wherein R^{f2} is a C₁₋₁₆ saturated polyfluoroalkylene group) or R^{f3}IBr (wherein R^{f3} is a C₁₋₁₆ saturated polyfluoroalkylene group) may, for example, be mentioned. R^{f2}I₂ is preferably 1,4-diiodoperfluorobutane. Further, R^{f3}IBr is preferably 1-bromo-4-iodoperfluorobutane.

Conditions for the emulsion polymerization for producing the fluoropolymer latex of the present invention are selected depending on the type of the desired fluoropolymer, the copolymerization ratio of fluoromonomers, the decomposition temperature of the polymerization initiator, etc. The polymerization pressure is preferably from at least 0 MPaG to at most 20 MPaG, particularly preferably from at least 0.3 MPaG to at most 10 MPaG, especially preferably from at least 0.3 MPa to at most 5 MPa. The polymerization temperature is preferably from at least 0°C to at most 100°C, particularly preferably from at least 10°C to at most 80°C.

As one of typical examples of fluoropolymers to be produced in accordance with the process for producing a fluoropolymer latex of the present invention, a TFE polymer (hereinafter referred to as PTFE) may be mentioned.

Here, PTFE includes not only a homopolymer of TFE but also a modified PTFE that is modified by copolymerizing another comonomer in such a small amount as not to bring about melt-flow. As such a comonomer, HFP, CTFE or a perfluoro(alkyl vinyl ether) (hereinafter referred to as PAVE) may be exemplified. The carbon number of the perfluoroalkyl group of PAVE is preferably from 1 to 8.

Further, as another typical example of such fluoropolymers, a TFE/PAVE copolymer, a TFE/HFP/PAVE copolymer, a TFE/E copolymer, a TFE/P/VdF copolymer or a TFE/PAVE copolymer may be exemplified. Here, the TFE/PAVE copolymer means a copolymer obtained by copolymerizing TFE and PAVE, and the same applies to other copolymers.

The process for producing a fluoropolymer latex of the present invention is suitable for producing a fluoropolymer.

As a preferred specific example of the fluoropolymer, PTFE, a TFE/CTFE copolymer, a TFE/P copolymer, a TFE/HFP copolymer, a VdF/HFP copolymer, a TFE/VdF/HFP copolymer, a TFE/CF₂=CFOCF₃ copolymer, a TFE/CF₂=CFOC₃F₇ copolymer, a TFE/CF₂=CFOCF_{3/}CF₂=CFOC₃F₇ copolymer, a TFE/CF₂=C(OC₂F₅)₂ copolymer, a TFE/MVE copolymer, a TFE/EVE copolymer, a TFE/BVE copolymer, a TFE/EVE/BVE copolymer, a VdF/CF₂=CFOC₃F₇ copolymer, an E/HFP copolymer or a TFE/P/VdF copolymer may be mentioned.

The process is particularly suitable for producing PTFE, a TFE/P copolymer, a TFE/P/VdF copolymer or a TFE/PAVE copolymer.

There is no particular limitation with regard to the molar ratio of the polymerized units based on the respective monomers in the above copolymer, and it may optionally be selected depending on the desired properties. For example, in the TFE/P copolymer, the molar ratio of polymerized units based on TFE/polymerized units based on P is preferably from 40/60 to 70/30, more preferably from 50/50 to 60/40. Further, in the TFE/PAVE copolymer, the perfluoroalkyl group of PAVE preferably has a carbon atom number of from 1 to 8, and an etheric oxygen atom may be contained in the perfluoroalkyl group. Such a perfluoroalkyl group may be a linear one, a branched one or a mixture thereof. As the perfluoroalkyl group, a CF₃ group, a C₃F₇ group, a C₃F₇OC₃F₆ group or a C₃F₇OC₃F₆OC₃F₆ group is more preferred.

Further, in the TFE/PAVE copolymer, the molar ratio of polymerized units based on TFE/ polymerized units based on PAVE is preferably from 85/15 to 25/75, more preferably from 75/25 to 40/60.

As a particularly preferred specific example of the fluoropolymer, PTFE, a TFE (40 to 60 mol%)/P (60 to 40 mol%) copolymer, a TFE (40 to 70 mol%)/CF₂=CFOCF₃ (60 to 30 mol%) copolymer, a TFE (40 to 70 mol%)/CF₂=CFOC₃F₇ (60 to 30 mol%) copolymer, a TFE (40 to 70 mol%)/CF₂=C(OC₂F₅)₂ (60 to 30 mol%) copolymer, a TFE (70 to 30 mol%)/MVE (30 to 70 mol%) copolymer, a TFE (70 to 30 mol%)/EVE (30 to 70 mol%) copolymer, a TFE (70 to 30 mol%)/BVE (30 to 70 mol%) copolymer, a TFE (60 to 30 mol%)/EVE (1 to 69 mol%)/BVE (1 to 69 mol%) copolymer, a VdF (40 to 70 mol%)/CF₂=CFOC₃F₇ (60 to 30 mol%) copolymer, an E (40 to 60 mol%)/HFP (60 to 40 mol%) copolymer or a TFE (30 to 60 mol%)/P (20 to 50 mol%)/VdF (1 to 40 mol%) copolymer may be mentioned.

Here, the TFE (40 to 60 mol%)/P (60 to 40 mol%) copolymer means a copolymer obtained by copolymerizing TFE and P at a ratio of from 40 to 60 mol%: from 60 to 40 mol%, and the same applies to other copolymers.

The fluoropolymer latex of the present invention can be produced by adding the emulsifier of the present invention to a fluoropolymer latex produced by using another emulsifier, to carry out substitution of the emulsifier or by emulsion polymerization of a fluoromonomer, and it is particularly preferably produced by emulsion polymerization.

The fluoropolymer latex of the present invention containing a fluorine-containing emulsifier can be concentrated by means of various methods such as an ED method (this method is referred to also as an Electro-decantation method or an electroconcentration method), a centrifugal sedimentation method or a heat sedimentation method as described in "Fluororesin Handbook (p. 32, published in 1990 by Nikkan Kogyo Shimbun, Ltd., edited by Satokawa Takaomi)".

The degree of concentration is such that the fluoropolymer concentration in the fluoropolymer latex, is preferably at least 30 mass%, more preferably at least 40 mass%, further preferably at least 50 mass% and particularly preferably at least 60 mass%. The upper limit of the fluoropolymer concentration is preferably at most 80 mass%, particularly preferably at most 70 mass%.

When the fluoropolymer is PTFE, a latex composition with high PTFE concentration to be obtained has a PTFE concentration of from 30 to 70 mass%, more preferably from 50 to 70 mass%, particularly preferably from 55 to 70 mass%.

At the time of concentration, it is preferred to stabilize the latex by adding the emulsifier of the present invention or another hydrocarbon emulsifier. As such a hydrocarbon emulsifier, an anionic emulsifier or a nonionic emulsifier is preferred, and a nonionic emulsifier is more preferred.

The fluoropolymer latex produced by the present invention may be coagulated by a known method to take out the fluoropolymer. For the coagulation, an optional method such as a salting-out method using a metal salt or the like, an acid coagulation method using an inorganic acid such as hydrochloric acid, a mechanical shearing method, or a freeze-thawing method, may be employed.

In a case where the fluoropolymer produced by the method of the present invention has an elastomer property, a crosslinking reaction may be carried out by means of a known method. As a specific example of such a crosslinking reaction, peroxide crosslinking, polyol crosslinking, amine crosslinking, triazine crosslinking or the like may be exemplified. The peroxide crosslinking is preferably used in view of the productivity, heat resistance and chemical resistance of various products to be obtained by crosslinking a fluoropolymer composition which is obtained by mixing the fluoropolymer with a crosslinking agent and other compounding agents.

As the crosslinking agent used for the peroxide crosslinking, an organic peroxide that generates peroxide radicals by heating, etc., is preferred. As a specific example of such a crosslinking agent, a dialkyl peroxide such as di-tert-butyl peroxide, tert-butylcumyl peroxide, dicumyl peroxide, α,α-bis(tert-butylperoxy)-p-diisopropylbenzene, 2,5-dimethyl-2,5-di(tert-butylperoxy)hexane or 2,5-dimethyl-2,5-di(tert-butylperoxy)hexane-3, 1,1-bis(tert-butylperoxy)-3,3,5-trimethylcyclohexane, 2,5-dimethylhexane-2,5-dihydroxyperoxide, benzoyl peroxide, tert-butylperoxybenzene, 2,5-dimethyl-2,5-di(benzoylperoxy)hexane, tert-butylperoxymaleic acid, or tert-butylperoxyisopropyl carbonate may be mentioned. Particularly preferred is a dialkyl peroxide. The type of the organic peroxide to be used and its content in the fluoropolymer (elastomer) composition are selected usually on the basis of e.g. the activity of the organic peroxide or its decomposition temperature.

The content of the organic peroxide is from 0.3 to 10 parts by mass, per 100 parts by mass of the fluorine-containing elastomer. If the content is within this range, a well-balanced crosslinking property of strength and elongation will be obtained. The range is preferably from 0.3 to 5 parts by mass, particularly preferably from 0.5 to 3 parts by mass.

In the crosslinking composition obtained by mixing an organic peroxide with the fluorine-containing elastomer produced by the process of the present invention, a crosslinking aid may preferably be incorporated. When the crosslinking aid is incorporated, radicals formed will react effectively with the crosslinking aid to increase the crosslinking efficiency. As such a crosslinking aid, a compound may be mentioned that has reactivity to peroxide radicals and radicals present on fluorine-containing elastomer molecules.

As a specific example of the crosslinking aid, triallyl cyanurate, triallyl isocyanurate, trimethallyl isocyanurate, triacryl formal, triallyl trimellitate, N,N'-m-phenylenebismaleimide, p-quinonedioxime, p,p'-dibenzoylquinone dioxime, dipropargyl terephthalate, diallyl phthalate, N,N',N",N"'-tetraallyl terephthalamide or a vinyl group-containing siloxane oligomer such as polymethyl vinylsiloxane or polymethylphenyl vinylsiloxane may be exemplified, and particularly triallyl cyanurate, triallyl isocyanurate or trimethallyl isocyanurate is preferred, and especially triallyl isocyanurate is preferred.

The content of the crosslinking aid is preferably from 0.1 to 10 parts by mass, more preferably from 0.5 to 5 parts by mass, per 100 parts by mass of the fluorine-containing elastomer. If the content is within this range, a well-balanced crosslinking property of strength and elongation will be obtained.

Further, in the crosslinkable composition to be obtained from the fluorine-containing elastomer of the present invention, for the purpose of coloring the composition, a pigment, a filler, a reinforcing agent, etc., may be incorporated. As the filler or the reinforcing agent, which is usually used, carbon black, titanium oxide, silicon dioxide, clay, talc, polytetrafluoroethylene, vinylidene polyfluoride, polyvinyl fluoride, polychlorotrifluoroethylene, a tetrafluoroethylene/ethylene copolymer, a tetrafluoroethylene/propylene copolymer or a tetrafluoroethylene/vinylidene fluoride copolymer may be exemplified.

The fluorine-containing emulsifier contained in a waste solution obtained by coagulation of the fluoropolymer latex produced by the process of the present invention, may be recovered by a known method and recycled. As such a recovering method, a method to have it adsorbed on a strongly basic anion exchange resin or a weakly basic anion exchange resin, a method to have it adsorbed on a synthetic adsorbent, a method to have it adsorbed on activated carbon, a method to have it included in a layered double hydroxide, a method of concentrating the waste water, etc., may be exemplified. The fluorine-containing emulsifier to be used for the present invention, which is recovered by the above method, can be reproduced by a known method.

Now, the present invention will be described in further detail with reference to Examples. However, the present invention is by no means restricted thereto.

### EXAMPLE 1

Into a pressure-resistant reactor made of stainless steel having an internal volume of 3,200 cc, equipped with a stirrer, 1,500 g of deionized water, 40 g of disodium hydrogenphosphate dodecahydrate, 0.5 g of sodium hydroxide, 198 g of tertiary butanol, 8 g of C₄F₉OCF₂CF₂OCF₂COONH₄ (hereinafter referred to as BEA) and 2.5 g of ammonium persulfate were charged. Further, an aqueous solution having 0.4 g of EDTA (disodium ethylenediamine tetraacetate dihydrate, the same applies hereinafter) and 0.3 g of ferrous sulfate heptahydrate preliminarily dissolved in 200 g of deionized water, was introduced. Then, TFE and P were fed so as to bring the molar ratio of TFE/P to be 85/15 and so as to bring the internal pressure of the reactor to be 2.5 MPaG at 25°C. The stirrer was spun at 300 rpm, and a 2.5 mass% Rongalit (sodium hydroxymethane sulfinate dihydrate, the same applies hereinafter) aqueous solution was added to initiate the polymerization reaction.

With the initiation of the polymerization, the internal pressure of the reactor decreased by 0.01 MPa, whereupon a mixed gas of TFE/P=56/44 (molar ratio) preliminarily prepared was fed to increase the internal pressure of the reactor to 2.51 MPaG. The polymerization reaction was continued by repeating this operation and sequentially adding the TFE/P mixed gas to maintain the internal pressure of the reactor to be from 2.49 to 2.51 MPaG. When the total amount of the mixed gas added reached 800 g, the addition of the Rongalit aqueous solution was stopped, and then the internal temperature of the reactor was cooled to 10°C to terminate the polymerization reaction. The amount of the Rongalit aqueous solution thus consumed by the polymerization was 30.0 g, and the polymerization time was about 5.5 hours. By the above operation, a TFE/P copolymer latex containing BEA was obtained. The coagulated product formed during the emulsion polymerization was collected, dried in an oven at 120°C for 12 hours and weighed, and its weight was 4.8 g.

The latex thus obtained was added to a 5 mass% calcium chloride aqueous solution to coagulate the latex by salting-out to obtain a TFE/P copolymer. Such a copolymer was collected by filtration, washed with deionized water and dried in an oven to obtain 795 g of a white TFE/P copolymer.

The fluorine content in the fluoropolymer thus obtained was 58.2 mass%, and the copolymerization ratio of TFE/P calculated on the basis of such a content was 56.3/43.7 (molar ratio).

### EXAMPLE 2

Into a pressure-resistant reactor made of stainless steel having an internal volume of 2,100 cc, equipped with a stirring blade, 1,500 g of deionized water, 17 g of BEA and 300 g of perfluoro(propyl vinyl ether) (hereinafter referred to as PPVE) were charged. While the mixture was stirred by an anchor blade at a speed of 300 rpm, the internal temperature of the reactor was raised to 60°C. After the internal temperature reached 60°C, TFE was fed so as to bring the internal pressure of the reactor to be 1.0 MPaG. Then, 5 mL of a 2.5 mass% ammonium persulfate aqueous solution was added to initiate the polymerization reaction. As the polymerization proceeds, the internal pressure of the reactor decreased by 0.01 MPa, whereupon TFE was fed to increase the internal pressure of the reactor to 1.01 MPaG. The polymerization reaction was continued by repeating this operation and sequentially adding the TFE gas to maintain the internal pressure of the reactor to be from 0.91 to 1.01 MPaG.

Every time when 15 g of the TFE gas was added, 15 mL of a mixed solution of PPVE/BrVE=98/2 (molar ratio) preliminarily prepared was fed to the reactor. The addition of the mixed solution was continued until 105 g of TFE was consumed. The number of addition of such a mixed solution was 7 in total, which equals to 105 mL. When the total amount of the TFE gas added reached 120 g, the addition of TFE was stopped, and then the internal temperature of the reactor was cooled to 10°C to terminate the polymerization reaction. The polymerization time was about 4.5 hours. By the above operation, a TFE/PPVE/BrVE copolymer latex containing BEA was obtained. The coagulated product formed during the emulsion polymerization was collected, dried in an oven at 120°C for 12 hours and weighed, and its weight was 2.5 g.

The latex thus obtained was added to a 3.6 N hydrochloric acid aqueous solution to coagulate it by pH adjustment to obtain a TFE/PPVE/BrVE copolymer. Such a copolymer was collected by filtration, washed with ultrapure water and dried in an oven to obtain 380 g of a white TFE/PPVE/BrVE copolymer.

The monomer copolymerization ratio of TFE/PPVE/BrVE in the TFE/PPVE/BrVE copolymer thus obtained was TFE/PPVE/BrVE=54/44/2 (molar ratio).

### EXAMPLE 3

Into a 100 L polymerization vessel, 736 g of paraffin wax, 59 L of ultrapure water and 33 g of BEA were charged. Then, it was heated to 70°C and subjected to nitrogen purge, followed by deaeration. Thereafter, TFE was introduced to bring the pressure to be 1.9 MPa. With stirring, 1 L of a 0.5 mass% disuccinic acid peroxide aqueous solution was fed to initiate the polymerization. As the polymerization proceeds, TFE was consumed, whereby the pressure in the polymerization vessel was decreased. Accordingly, TFE was continuously supplied during the polymerization to maintain the pressure constant. After 45 minutes from the initiation of the polymerization, the temperature was raised up to 90°C at 6°C/hr. Further, when the amount of TFE reached 6.6 kg, 1 L of a 5.6 mass% BEA aqueous solution was added. When 140 minutes passed from the initiation of the polymerization, the stirring and the supply of TFE were stopped, and TFE in the polymerization vessel was purged to terminate the polymerization. The obtained PTFE latex having a solid content of 24.3 mass% was coagulated to separate PTFE in wet state. Then, the separated PTFE in wet state was dried at 205°C to obtain 6,530 g of PTFE fine powder. The coagulated product formed during the emulsion polymerization was collected, dried in an oven at 120°C for 12 hours and weighed, and its weight was 63.2 g.

### EXAMPLE 4

793 g of a TFE/P copolymer was obtained in the same manner as in Example 1 except that n-C₆F₁₃OCF₂CF₂OCF₂COONH₄ was used instead of BEA. The coagulated product was 5.1 g. The data are shown in Table 1.

### EXAMPLE 5

374 g of a TFE/PPVE/BrVE copolymer was obtained in the same manner as in Example 2 except that n-C₆F₁₃OCF₂CF₂OCF₂COONH₄ was used instead of BEA. The coagulated product was 3.2 g. The data are shown in Table 1.

### EXAMPLE 6

PTFE latex having a solid content of 24.0 mass% was obtained in the same manner as in Example 3 except that n-C₆F₁₃OCF₂CF₂OCF₂COONH₄ was used instead of BEA. Then, 6,523 g of PTFE fine powder was obtained in the same manner as in Example 3. The coagulated product was 68.6 g. The data are shown in Table 1.

### EXAMPLE 7

796 g of a TFE/P copolymer was obtained in the same manner as in Example 1 except that C₄F₉O(CF₂CF₂O)₂CF₂COONH₄ was used instead of BEA. The coagulated product was 4.6 g. The data are shown in Table 1.

### EXAMPLE 8

378 g of a TFE/PPVE/BrVE copolymer was obtained in the same manner as in Example 2 except that C₄F₉O(CF₂CF₂O)₂CF₂COONH₄ was used instead of BEA. The coagulated product was 2.8 g. The data are shown in Table 1.

### EXAMPLE 9

PTFE latex having a solid content of 24.1 mass% was obtained in the same manner as in Example 3 except that C₄F₉O(CF₂CF₂O)₂CF₂COONH₄ was used instead of BEA. Then, 6,532 g of PTFE fine powder was obtained in the same manner as in Example 3. The coagulated product was 63.7 g. The data are shown in Table 1.

### EXAMPLE 10

To the PTFE latex containing the emulsifier of the present invention having the PTFE concentration of 25.3 mass% obtained in the same manner as in Example 3, a 5 mass%, based on PTFE, of polyoxyethylene octylphenyl ether was added. Thereafter, the mixture was concentrated by an electroconcentration method to obtain 10.9 kg of a 60 mass% PTFE latex. The dry mass of the coagulated product formed during this concentration was 53 g, and it was 4.9 mass%, based on the obtained 60 mass% PTFE latex.

### COMPARATIVE EXAMPLE 1

A TFE/P copolymer latex was obtained in the same manner as in Example 1 except that ammonium perfluorooctanoate (hereinafter referred to as APFO) was used as an emulsifier. The Rongalit aqueous solution consumed in this polymerization was 51.1 g. The polymerization time was 6.5 hours. The coagulated product was 8.9 g. Then, the latex was coagulated and dried in the same manner as in Example 1 to obtain 786 g of a TFE/P copolymer. The fluorine content in such a fluoropolymer was 57.9 mass%, and the copolymerization ratio of TFE/P calculated on the basis of this content was 55.8/44.2 (molar ratio).

### COMPARATIVE EXAMPLE 2

369 g of a TFE/PPVE/BrVE copolymer was obtained in the same manner as in Example 2 except that APFO was used as an emulsifier instead of BEA. The polymerization time was 5.5 hours. The coagulated product was 4.7 g. Further, the copolymerization ratio of TFE/PPVE/BrVE=59/39/2 (molar ratio).

### COMPARATIVE EXAMPLE 3

PTFE latex having a solid content of 23.5 mass% was obtained in the same manner as in Example 3 except that APFO was used as an emulsifier instead of BEA. Then, 6,519 g of PTFE fine powder was obtained in the same manner as in Example 3. The coagulated product was 98.3 g. The data are shown in Table 1.

### COMPARATIVE EXAMPLE 4

To the PTFE latex containing APFO having the PTFE concentration of 24.8 mass% obtained in the same manner as in Comparative Example 3, a 5 mass%, based on PTFE, of polyoxyethylene octylphenyl ether was added. Thereafter, the mixture was concentrated by an electroconcentration method to obtain 10.8 kg of a 60 mass% PTFE latex. The dry mass of the coagulated product formed during this concentration was 83 g, and it was 7.7 mass%, based on the obtained 60 mass% PTFE latex.

The productivity of the fluoropolymer latex and the storage stability of the fluoropolymer latex in Examples and Comparative Examples were evaluated by the following method.
(1) Productivity of fluoropolymer latex
   The productivity of the fluoropolymer latex was evaluated by the following standards.
   High: Polymerization rate is faster than a conventional emulsifier.
   Medium: Polymerization rate is equivalent to a conventional emulsifier.
   Low: Polymerization rate is slower than a conventional emulsifier.
(2) Storage stability of fluoropolymer latex

The obtained fluoropolymer latex was diluted with deionized water so as to bring its polymer concentration to be 30 mass%. Then, into a cylindrical glass container having a height of 10 cm and an internal volume of 100 mL, the latex was charged, sealed and left to stand in a dark cold place for 1 month. And then, the ratio of a transparent layer which is the upper layer of the latex thus formed by the standing, was calculated by percentage. The smaller the value the higher the storage stability.

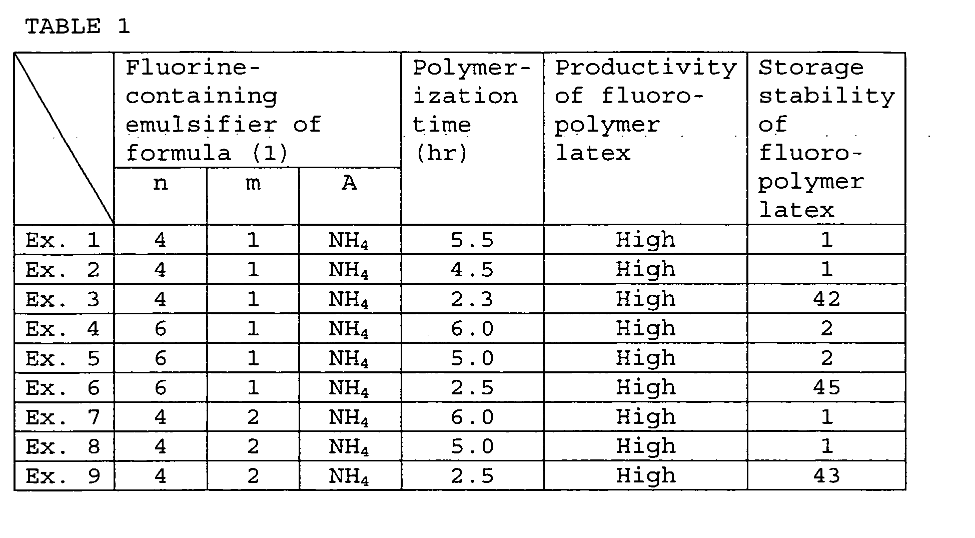

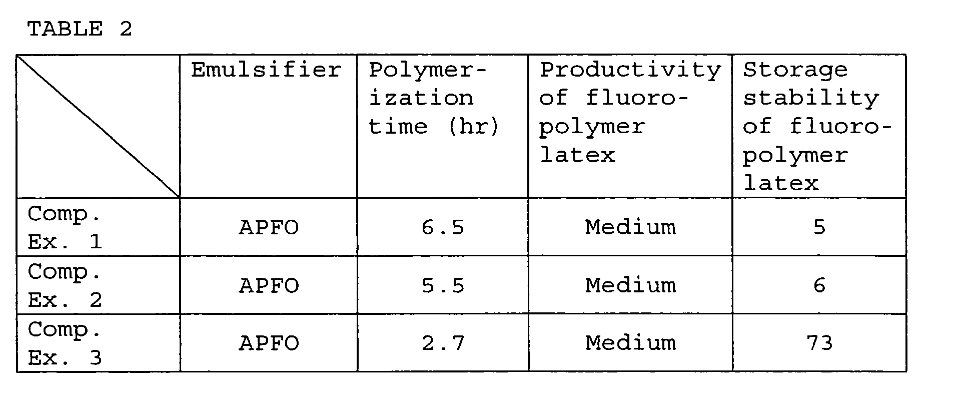

### INDUSTRIAL APPLICABILITY

The fluoropolymer latex of the present invention may be used for producing a latex of a fluoropolymer such as a fluororubber or a fluororesin. The fluoropolymer latex of the present invention may be used as a coating agent for various materials such as metal substrates, inorganic oxide substrates, polymer substrates, synthetic fibers, glass fibers, carbon fibers or natural fibers. Further, the fluoropolymer obtained by coagulating the fluoropolymer latex is useful as a material excellent in heat resistance, oil resistance, chemical resistance, weather resistance, non-tackiness, antifouling property, water repellency, oil repellency, solvent repellency, etc.

The entire disclosure of Japanese Patent Application No. 2004-220860 filed on July 28, 2004 including specification, claims and summary is incorporated herein by reference in its entirety.

## Claims

1. A fluoropolymer latex **characterized by** comprising a fluoropolymer and a fluorine-containing emulsifier represented by the formula (1) : F(CF₂)ₙO(CF₂CF₂O)ₘCF₂COOA (wherein A is a hydrogen atom, an alkali metal or NH₄, n is an integer of from 3 to 10, and m is 0 or an integer of from 1 to 3) .

2. The fluoropolymer latex according to Claim 1, wherein the fluoropolymer is a polymer of at least one fluoromonomer selected from the group consisting of tetrafluoroethylene, vinylidene fluoride, hexafluoropropylene, CF₂=C(OR_{f})ₙF₂₋ₙ (wherein R_{f} is a C₁₋₈ perfluoroalkyl group or a perfluorooxyalkylene group containing at least one ether bond per molecule, n is 1 or 2, and any of carbon chains may be a straight chain, may contain a branched chain or may have a cyclic structure) and chlorotrifluoroethylene, if necessary with at least one monomer selected from the group consisting of CH₂=CHOR (wherein R is a C₁₋₈ alkyl group or an oxyalkylene group containing at least one ether bond, and any of carbon chains may be a straight chain, may contain a branched chain or may have a cyclic structure), propylene and ethylene, and if necessary with at most 10 mol% of crosslinking group-containing monomer.

3. The fluoropolymer latex according to Claim 1 or 2, wherein the fluoropolymer is at least one member selected from the group consisting of a tetrafluoroethylene polymer, a tetrafluoroethylene/chlorotrifluoroethylene copolymer, a tetrafluoroethylene/propylene copolymer, a tetrafluoroethylene/hexafluoropropylene copolymer, a vinylidene fluoride/hexafluoropropylene copolymer, a tetrafluoroethylene/vinylidene fluoride/hexafluoropropylene copolymer, a tetrafluoroethylene/CF₂=CFOCF₃ copolymer, a tetrafluoroethylene/CF₂=CFOC₃F₇ copolymer, a tetrafluoroethylene/CF₂=CFOCF₃/CF₂=CFOC₃F₇ copolymer, a tetrafluoroethylene/CF₂=C(OC₂F₅)₂ copolymer, a tetrafluoroethylene/methyl vinyl ether copolymer, a tetrafluoroethylene/ethyl vinyl ether copolymer, a tetrafluoroethylene/n-butyl vinyl ether copolymer, a tetrafluoroethylene/ethyl vinyl ether/n-butyl vinyl ether copolymer, a vinylidene fluoride/CF₂=CFOC₃F₇ copolymer, an ethylene/hexafluoropropylene copolymer and a tetrafluoroethylene/propylene/vinylidene fluoride copolymer.

4. The fluoropolymer latex according to Claim 1 or 2, wherein the fluoropolymer is at least one member selected from the group consisting of a tetrafluoroethylene polymer, a tetrafluoroethylene (from 40 to 60 mol%)/propylene (from 60 to 40 mol%) copolymer, a tetrafluoroethylene (from 40 to 70 mol%)/CF₂=CFOCF₃ (from 60 to 30 mol%) copolymer, a tetrafluoroethylene (from 40 to 70 mol%)/CF₂=CFOC₃F₇ (from 60 to 30 mol%) copolymer, a tetrafluoroethylene (from 40 to 70 mol%)/CF₂=C(OC₂F₅)₂ (from 60 to 30 mol%) copolymer, a tetrafluoroethylene (from 70 to 30 mol%)/methyl vinyl ether (from 30 to 70 mol%) copolymer, a tetrafluoroethylene (from 70 to 30 mol%)/ethyl vinyl ether (from 30 to 70 mol%) copolymer, a tetrafluoroethylene (from 70 to 30 mol%)/n-butyl vinyl ether (from 30 to 70 mol%) copolymer, a tetrafluoroethylene (from 60 to 30 mol%)/ethyl vinyl ether (from 1 to 69 mol%)/n-butyl vinyl ether (from 1 to 69 mol%) copolymer, a vinylidene fluoride (from 40 to 70 mol%)/CF₂=CFOC₃F₇ (from 60 to 30 mol%) copolymer, an ethylene (from 40 to 60 mol%)/hexafluoropropylene (from 60 to 40 mol%) copolymer and a tetrafluoroethylene (from 30 to 60 mol%)/propylene (from 20 to 50 mol%)/vinylidene fluoride (from 1 to 40 mol%) copolymer.

5. The fluoropolymer latex according to any one of Claims 1 to 4, wherein the fluorine-containing emulsifier is F(CF₂)ₙOCF₂CF₂OCF₂COOA (wherein A is a hydrogen atom, an alkali metal or NH₄, and n is 3 or 4).

6. A process for producing a fluoropolymer latex, which comprises emulsion polymerizing a fluoromonomer in an aqueous medium containing from 0.001 to 10.0 mass% of a fluorine-containing emulsifier represented by the formula (1) : F(CF₂)ₙO(CF₂CF₂O)ₘCF₂COOA (wherein A is a hydrogen atom, an alkali metal or NH₄, n is an integer of from 3 to 10, and m is 0 or an integer of from 1 to 3) to obtain the fluoropolymer latex.

7. The process for producing a fluoropolymer latex according to Claim 6, wherein the fluoromonomer is at least one fluoromonomer selected from the group consisting of tetrafluoroethylene, vinylidene fluoride, hexafluoropropylene, CF₂=C(OR_{f})ₙF₂₋ₙ (wherein R_{f} is a C₁₋₈ perfluoroalkyl group or a perfluorooxyalkylene group containing at least one ether bond per molecule, n is 1 or 2, and any of carbon chains may be a straight chain, may contain a branched chain or may have a cyclic structure) and chlorotrifluoroethylene, and, if necessary, at least one monomer selected from the group consisting of CH₂=CHOR (wherein R is a C₁₋₈ alkyl group or an oxyalkylene group containing at least one ether bond, and any of carbon chains may be a straight chain, may contain a branched chain or may have a cyclic structure), propylene and ethylene is copolymerized and if necessary, at most 10 mol% of crosslinking group-containing monomer is copolymerized.

8. The process for producing a fluoropolymer latex according to Claim 6 or 7, wherein the fluorine-containing emulsifier is F(CF₂)ₙOCF₂CF₂OCF₂COOA (wherein A is a hydrogen atom, an alkali metal or NH₄, and n is 3 or 4).

9. A fluoropolymer latex which is obtained by concentrating a fluoropolymer latex obtained by the process as defined in any one of Claims 6 to 8, to a fluoropolymer concentration of at least 30 mass%.

10. A fluoropolymer which is obtained by coagulating a fluoropolymer latex obtained by the process as defined in any one of Claims 6 to 8.
